# FASCICULE DE BREVET EUROPEEN

(11) **EP 3 510 652 B1**
(45) Date de publication et mention de la délivrance du brevet: **25.06.2025**
(21) Numéro de dépôt: 17758561.9
(22) Date de dépôt: 01.09.2017
(51) Int. Cl.: H01M 50/176, H01M 50/179, H01M 50/50

(54) **TRAVERSÉE FORMANT BORNE POUR ACCUMULATEUR ÉLECTROCHIMIQUE MÉTAL-ION ET ACCUMULATEUR ASSOCIÉ**
DURCHFÜHRUNG ZUR BILDUNG EINER KLEMME FÜR EINE ELEKTROCHEMISCHE METALL-IONEN-BATTERIE UND ENTSPRECHENDE BATTERIE
FEEDTHROUGH FORMING A TERMINAL FOR AN ELECTROCHEMICAL METAL-ION BATTERY AND ASSOCIATED BATTERY

(30) Priorité: 07.09.2016 FR 1658288
(43) Date de publication de la demande: 17.07.2019
(73) Titulaire: Commissariat à l'Energie Atomique et aux Energies Alternatives, 75015 Paris (FR)
(72) Inventeur: DEWULF, Frédéric, 38500 Voiron (FR); JOST, Pierre, 38220 Saint-Pierre-De-Mesage (FR); LEYS, Côme-Emmanuel, Grenoble 38100 (FR)
(74) Mandataire: Ipsilon NNY
(86) Numéro de dépôt international: PCT/EP2017/071951
(87) Numéro de publication internationale: WO 2018/046397

(56) Documents cités:
- WO-A1-2017/141694
- FR-A1- 2 798 227
- JP-A- 2000 138 055
- JP-A- H07 235 289
- US-A1- 2006 292 442
- US-A1- 2012 058 390

## Description

### Domaine technique

La présente invention concerne une traversée formant borne pour accumulateur électrochimique métal-ion, et un tel accumulateur.

L'invention a trait plus particulièrement à un accumulateur électrochimique au lithium-ion (Li-ion) de forte capacité, typiquement supérieur à 10 Ampère-heure (Ah), et présentant une aptitude au passage de forts courants, typiquement supérieurs à 100 A.

L'invention concerne plus particulièrement la réalisation d'une traversée d'un boitier pour permettre à l'accumulateur Li-ion de forte capacité qui en est équipé de pouvoir délivrer des forts courants.

Par « traversée », on précise qu'on entend le sens usuel, c'est-à-dire un dispositif servant à faire passer un élément conducteur électrique à travers une paroi et en isolant le conducteur de cette paroi.

Bien que décrite en référence à un accumulateur Lithium-ion, l'invention s'applique à tout accumulateur électrochimique métal-ion, c'est-à-dire également Sodium-ion, Magnésium-ion, Aluminium-ion...

### Art antérieur

Une batterie ou accumulateur lithium-ion comporte usuellement au moins une cellule électrochimique constituée d'un constituant d'électrolyte entre une électrode positive ou cathode et une électrode négative ou anode, un collecteur de courant connecté à la cathode, un collecteur de courant connecté à 1' anode et enfin, un emballage agencé pour contenir la cellule électrochimique avec étanchéité tout en étant traversé par une partie des collecteurs de courant.

Le constituant d'électrolyte peut être de forme solide, liquide ou gel. Sous cette dernière forme, le constituant peut comprendre un séparateur en polymère ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF6.

L'électrode positive ou cathode est constituée de matériaux d'insertion du cation Lithium qui sont en général composite, comme LiFePO₄, LiCoO₂, LiNi_{0.33}Mn_{0.33}Co_{0.33}O₂.

L'électrode négative ou anode est très souvent constituée de carbone graphite ou en Li₄TiO₅O₁₂ (matériau titanate), éventuellement également à base de silicium ou de composite formé à base de silicium.

Le collecteur de courant connecté à l'électrode positive est en général en aluminium.

Le collecteur de courant connecté à l'électrode négative est en général en cuivre, en cuivre nickelé ou en aluminium.

Une batterie ou accumulateur lithium-ion peut comporter bien évidemment une pluralité de cellules électrochimiques qui sont empilées les unes sur les autres.

Traditionnellement, une batterie ou accumulateur Li-ion utilise un couple de matériaux à l'anode et à la cathode lui permettant de fonctionner à un niveau de tension élevé, typiquement égal à 3,6 Volt.

Une batterie ou accumulateur Li-ion comporte un emballage rigide lorsque les applications visées sont contraignantes où l'on cherche une longue durée de vie, avec par exemple des pressions à supporter bien supérieures et un niveau d'étanchéité requis plus strict, typiquement inférieure à 10⁻⁸ mbar.1/s, ou dans des milieux à fortes contraintes comme le domaine aéronautique ou spatial.

Aussi, à ce jour un emballage rigide est constitué d'un boitier métallique, typiquement en acier inoxydable (inox 316L ou inox 304), en aluminium (A1 1050 ou Al 3003) ou en titane.

Actuellement, deux types de boitier rigide sont fabriqués.

Le premier type consiste en un boitier rigide constitué avec un fond usiné et un couvercle soudés entre eux sur leur périphérie par laser. Les collecteurs de courant sont constitués en partie par des fils métalliques ou pions. Le ou les pions est (sont) soudé par soudure électrique ou par ultrasons à la partie du collecteur de courant correspondant connectée elle-même à une des électrodes d'une cellule électrochimique ou d'un empilement de cellules électrochimiques. Pour réaliser l'isolation électrique entre le couvercle métallique du boitier et le pion métallique, une bille de verre enverre le pion en constituant ainsi ce qui est communément appelée une traversée verre-métal (TVM). En outre, pour réaliser l'étanchéité avec le couvercle du boitier, une bague autour de la bille de verre et en général dans le même métal que celui du boitier est soudée à ce dernier. Certaines configurations prévoient d'utiliser une seule TVM, le boitier constituant l'autre borne aussi appelé pôle de l'accumulateur.

Le deuxième type consiste également en un boitier rigide constitué avec un godet embouti et un couvercle soudés entre eux sur leur périphérie par laser. En revanche, les collecteurs de courant comprennent une traversée avec une partie faisant saillie sur le dessus du boitier et qui forme une borne aussi appelée pôle apparent de la batterie.

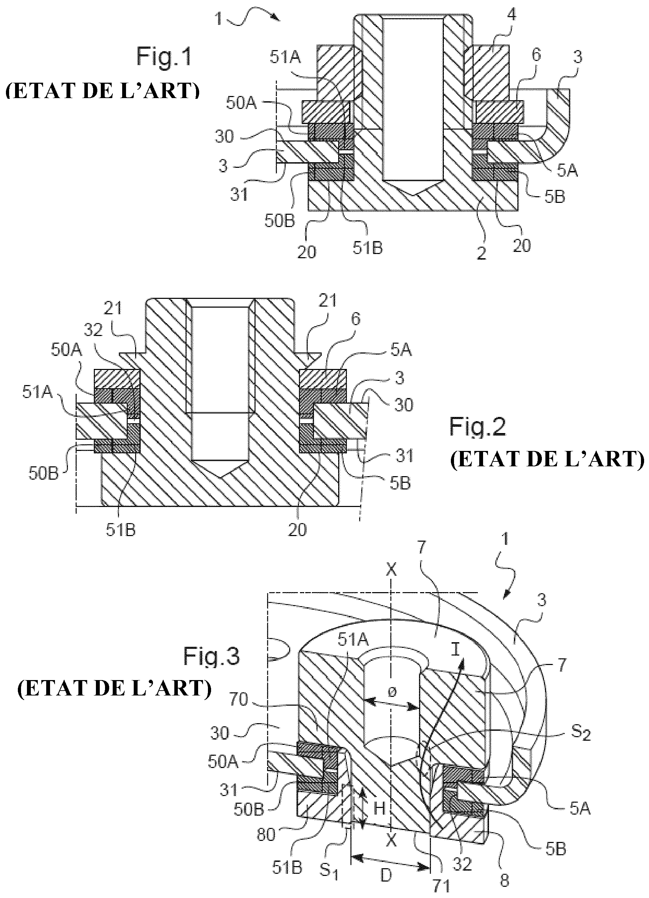

Un premier exemple d'assemblage d'une telle traversée 1 formant borne avec le collecteur de courant 2 et avec le couvercle 3 d'un boitier est montré en figure 1: le collecteur 2, typiquement en cuivre sous la forme d'une pièce mâle filetée intérieurement est fixé par vissage à l'aide d'un écrou 2 de type M5 ou M8. Deux rondelles 5A, 5B en matériau isolant électrique, typiquement en polypropylène, superposées l'une sur l'autre, sont intercalées l'une 5A entre le couvercle 3 et l'autre rondelle 6 d'appui de l'écrou 4 et l'autre 5B entre le couvercle 3 et le collecteur 2. Ces rondelles 5A, 5B réalisent l'étanchéité et l'isolation électrique du collecteur 2 par rapport au couvercle 3 de boitier. Plus précisément, dans ce premier exemple illustré, les deux rondelles isolantes 5A, 5B sont identiques et comportent chacune une portion d'appui 50A, 50B et une portion de guidage et centrage 51A, 51B. La portion d'appui 50A est en appui surfacique avec pression à la fois contre la face 30 de la paroi du couvercle 3 et contre la rondelle d'appui 6 de l'écrou 4. De manière analogue, la portion d'appui 50B est en appui surfacique à la fois contre la face opposée 31 du couvercle 3 et contre la portion d'appui 20 du collecteur de courant 2. Les portions de guidage et centrage 51A, 51B sont, quant à elles, à la fois en contact contre le bord de l'orifice traversant 32 du couvercle 3 et contre le collecteur 2. Ces portions de guidage et centrage 51A, 51B permettent de guider et centrer à la fois les rondelles 5A, 5B dans l'orifice traversant 32 et le collecteur mâle 2 dans lesdites rondelles 5A, 5B.

Un deuxième exemple d'assemblage d'une traversée 1 formant borne avec le collecteur de courant 2 et avec le couvercle 3 d'un boitier est montré en figure 2: le collecteur 2, typiquement en cuivre, sous la forme d'une pièce mâle filetée intérieurement est fixé par sertissage du collecteur sur la rondelle d'appui 6. On retrouve ici également les deux rondelles 5A, 5B en matériau isolant électrique, avec leurs portions d'appui 50A, 50B et leurs portions de guidage et de centrage 51A, 51B qui sont agencées à l'identique et réalisent les mêmes fonctions que dans le premier exemple. En revanche, la fixation par sertissage selon ce deuxième exemple se fait sans utilisation de pièce supplémentaire, tel que l'écrou 4 de vissage du premier exemple. En effet, le sertissage est réalisé par écrasement mécanique d'une portion de sertissage 21 disposée sur l'extérieur de la partie cylindrique du collecteur 2, contre la rondelle d'appui 6.

Un troisième exemple d'assemblage d'une traversée formant borne avec le collecteur de courant et avec le couvercle d'un boitier est décrit dans la demande de brevet FR 2798227.

Comme dit précédemment, une batterie ou accumulateur Li-ion utilise un couple de matériaux à l'anode et à la cathode lui permettant de fonctionner à un niveau de tension élevé, typiquement égal à 3,6 Volt.

D'autres couples de matériaux sont possibles et délivrent un niveau de tension moindre. A titre d'exemple, un couple de matériaux LiFePO₄/graphite délivre un niveau de tension moyenne en fonctionnement compris entre 3,0 et 3,2 Volt. A titre d'exemple également, un couple de matériaux LiFePO₄/Li₄TiO₅O₁₂ délivre un niveau de tension moyenne en fonctionnement compris entre 1,6 et 1,8 Volt.

La solution proposée dans la demande FR 2798227 précitée n'est pas adaptée au passage de courants élevés, car le faire reviendrait à engendrer une perte de contact par décohésion entre la pièce mâle et de la pièce femelle au cours de l'échauffement engendrant des dilatations thermiques, notamment du fait des géométries desdites pièces et de l'absence de soudure laser...

C'est pourquoi, la demanderesse a proposé dans la demande de brevet FR 2989836, un accumulateur Li-ion muni d'un boitier avec les bornes de connexion permettant de faire passer des courants très élevés, typiquement supérieurs à 100A, avec des niveaux de tension moyenne inférieurs à celui traditionnellement utilisé égal à 3,6 Volt. En effet, pour des applications dites de puissance, un accumulateur de forte capacité doit délivrer à ses bornes une puissance très élevée, c'est-à-dire un produit du courant par la tension très élevés. Or, du fait de l'utilisation de couples à niveaux de tension moindre, il est nécessaire de délivrer des courants plus élevés que traditionnellement.

On a représenté en figure 3, un exemple de traversée formant borne 1 d'un accumulateur Li-ion, selon la demande FR 2989836.

La traversée 1 est réalisée à travers un orifice 32 débouchant de part et d'autre d'un couvercle 3 d'un boitier d'accumulateur Li-ion. Ce couvercle comporte deux faces opposées 30, 31. La traversée 1 s'étend selon un axe X parallèle à l'axe du boitier de l'accumulateur Li-ion.

La traversée 1 comporte tout d'abord deux rondelles 5A, 5B électriquement isolantes identiques. Chaque rondelle comporte une portion d'appui 50A, 50B et une portion de guidage 51A, 51B en saillie par rapport à la portion d'appui. La portion d'appui de la rondelle 5A supérieure est en appui surfacique avec pression contre la face supérieure 30 du couvercle 3 et sa portion de guidage 51A est en contact avec le bord de l'orifice 32 du couvercle 3. De manière similaire, la portion d'appui de la rondelle 5B inférieure est en appui surfacique avec pression contre la face inférieure 30 du couvercle 3 et sa portion de guidage 51B est en contact contre le bord de l'orifice 32 du couvercle 3.

La traversée 1 comporte une pièce mâle électriquement conductrice 7 ajustée serrée dans une pièce femelle également conductrice 8. La pièce femelle 8 est débouchante.

Chacune des pièces mâle 7 et femelle comporte une portion d'appui 70, 80. La portion d'appui 70 de la pièce mâle 7 est en en appui surfacique avec pression contre la portion d'appui 50A de la rondelle supérieure 5A, tandis que la portion d'appui 80 de la pièce femelle est en appui surfacique avec pression contre la portion d'appui 50B de la rondelle inférieure 5B. Tel qu'illustré en figure 3, la pièce femelle 8 est en outre en appui surfacique avec pression liée à sa déformation contre les portions de guidage 51A, 51B des rondelles.

Selon cette demande FR 2989836, le(s) matériau(x) des pièces mâle 7 et femelle 8 est (sont) choisi(s) et leur sections dimensionnées de sorte à permettre le passage d'un courant électrique de valeur au moins égale à 100A, qui peut être un courant continu pendant une durée au minimum de 3 minutes. Sur la figure 3, le tracé fléché en noir symbolise le trajet d'un courant I supérieur à 100A à travers la traversée 1 selon la demande FR 2989836.

Généralement, les pièces conductrices d'une traversée ou borne étanche mise en œuvre dans les accumulateurs Li-ion connus, en particulier dans les demandes de brevet précitées, sont en cuivre nickelé. Cela est dû au fait qu'une telle traversée sert en tant que borne négative de l'accumulateur et est donc reliée électriquement à l'électrode négative, qui comprend très souvent du graphite en tant que matériau actif d'insertion, graphite en général supporté par enduction sur un feuillard en cuivre. Autrement dit, le cuivre nickelé des pièces conductrices de la borne est le matériau le plus compatible avec le feuillard en cuivre de l'électrode négative.

Or, les accumulateurs métal-ion de nouvelle génération impliquent d'utiliser de nouveaux types de matériaux actifs d'insertion, tels que le silicium, le titanate ou le sodium. Non seulement, ces matériaux peuvent être enduits de manière satisfaisante sur un substrat en aluminium, tel qu'un feuillard en aluminium, mais en outre, la sélection d'un grade d'aluminium le plus pur possible, à l'intérieur de l'accumulateur permet d'éviter, avec lesdits matériaux, la présence de pollutions et la génération de couples galvaniques en présence de l'électrolyte, pouvant mener à de la corrosion.

Les inventeurs ont ainsi été confrontés à la nécessité de définir une traversée d'un accumulateur dont les pièces conductrices avec au moins une partie en aluminium afin de permettre la meilleure compatibilité avec un substrat en aluminium, en tant que support, des nouveaux types de matériaux actifs d'insertion, tels que le silicium, le titanate ou le sodium.

Ils se sont naturellement tournés vers la solution selon la demande FR 2989836, en utilisant des pièces mâle et femelle en aluminium.

Or, dans certaines conditions d'essais d'assemblage par sertissage entre ces pièces, ils ont mis en évidence que des déformations importantes de la base de la pièce femelle pouvaient apparaître, avec tout particulièrement une augmentation prononcée du diamètre de la base de la pièce femelle liée à la plasticité de l'aluminium sous la pression exercée à l'étape de sertissage entre pièces mâle et femelle.

JP2000138055 divulgue une traversée de batterie comportant une borne d'électrode positive comportant une pièce mâle vissée dans une pièce femelle.

US2006/292442 divulgue également un vissage entre les pièces mâle et femelle d'une traversée.

US2012/058390 divulgue une traversée d'accumulateur électrochimique à travers un orifice du couvercle comportant une pièce mâle venant s'emmancher en force dans une pièce femelle conductrice, sans déboucher.

WO2017/141694 divulgue une traversée de batterie comportant une pièce mâle 230 insérée dans une pièce femelle 205, la pièce mâle étant celle à l'intérieur du boitier

JP H07235289 divulgue une borne comportant une pièce mâle déformée lors du montage dans une pièce femelle comportant un trou borgne. Il existe donc un besoin d'améliorer la réalisation d'une traversée étanche formant borne pour accumulateur électrochimique métal-ion, au travers d'un boitier de l'accumulateur, notamment en vue d'avoir au moins une partie des pièces conductrices de la traversée, en aluminium, afin de pouvoir utiliser d'autres matériaux actifs d'insertion pour l'(les) électrode(s) notamment négative(s) de l'accumulateur, tels que le silicium, le titanate ou le sodium, qui peuvent être supportés par un substrat en aluminium.

### Exposé de l'invention

Pour ce faire, l'invention concerne, sous l'un de ses aspects, une traversée formant borne pour accumulateur électrochimique au lithium-ion (Li-ion), selon la revendication 1. Cette traversée, réalisée à travers un orifice débouchant de part et d'autre d'une paroi comportant deux faces opposées, comporte
- une pièce mâle électriquement conductrice et,
- une pièce femelle en alliage à base d'aluminium, une portion de la pièce mâle étant ajustée serrée dans un trou borgne de la pièce femelle.

Par « alliage à base d'aluminium », on entend un alliage comprenant très majoritairement de l'aluminium, avec le cas échéant d'autres éléments en faible proportion, tels que Si, Mn, Zn, Fe, Ti, typiquement inférieure à 0,5%.

Selon un mode de réalisation avantageux, la traversée comporte :
- deux rondelles électriquement isolantes, comportant chacune une portion d'appui surfacique en appui contre l'une des faces de la paroi et une portion de guidage en saillie par rapport à la portion d'appui et en contact avec le bord de l'orifice,
traversée dans laquelle chacune des pièces conductrices comportant une portion d'appui en appui surfacique contre une portion d'appui des rondelles.

Les rondelles isolantes peuvent être réalisées en polyéthèrimide (PEI).

Selon un mode de réalisation particulièrement avantageux, la pièce mâle est en alliage à base d'aluminium différent de celui de la pièce femelle.

Selon ce mode, de préférence, l'alliage aluminium de la pièce mâle est choisi parmi un grade 5754, 6060 ou 3003 avec un état écroui H18, tandis que l'alliage d'aluminium de la pièce femelle est un grade 1050.

Ainsi, selon l'invention, on peut proposer avantageusement une traversée avec un couple de pièces mâle et femelle toutes deux en alliage d'aluminium mais qui sont distincts afin de répondre de manière adaptée et différenciée aux contraintes auxquelles les pièces sont soumises. La pièce mâle est donc réalisée en un alliage d'aluminium qui présente de très bonnes caractéristiques mécaniques tandis que l'alliage d'aluminium de la pièce femelle est choisi pour sa compatibilité chimique avec le cœur électrochimique d'un accumulateur métal-ion.

Pour la pièce mâle, un grade 5754, un grade 6060 ou un grade 3003 avec un état écroui H18 possède de très bonnes caractéristiques mécaniques et reste intègre lorsqu'une pression est appliquée sur sa surface, notamment lors du sertissage selon l'invention. Parmi ces très bonnes propriétés mécaniques, il y a la résistance à la rupture élevée ce qui permet de pouvoir appliquer un couple de serrage par vissage entre la pièce mâle de la traversée et un busbar à un niveau équivalent voire supérieur de celui applicable sur une borne à base de cuivre selon l'état de l'art. Typiquement; le couple de serrage par vissage qui peut être appliqué sur une borne de sortie selon l'invention est supérieur à 4 N.m.

En outre, les grades 5754 et 6060 sont directement compatibles avec un grade d'aluminium 1050 pour la pièce femelle, et ce afin d'assurer une conduction électrique continue, à résistivité électrique faible et relativement proche de celle du grade 1050.

Pour un grade 3003 avec un état écroui H₁₈, la teneur en Mg peut être avantageusement comprise entre 0,01 et 0,05%, et la teneur en cuivre (Cu) comprise entre 0,05 et 0,2%.

Pour un grade 5754, la teneur en Mg peut être avantageusement comprise entre 2,6 et 3,2% et la teneur en cuivre (Cu) comprise entre 0,05 et 0,1%.

Pour un grade 6060, la teneur en Mg peut être avantageusement comprise entre 0,35 et 0,6% et la teneur en cuivre (Cu) comprise entre 0,05 et 0,1%.

En ce qui concerne la pièce femelle, un grade 1050 est parfaitement compatible avec les matériaux qui peuvent constituer le cœur électrochimique d'un accumulateur métal-ion, comprenant les matériaux d'insertion actifs à base de silicium, titanate ou sodium, un électrolyte à base de LiPF6 pour un accumulateur Li-ion... De plus, ce grade d'aluminium est similaire à celui usuellement utilisé pour les collecteurs de courant et feuillard d'électrode à base d'aluminium.

Autrement dit, selon l'invention, on réalise le même type de traversée que celle selon la demande de brevet FR 2989836, avec en outre l'ajustement serré entre une portion en saillie de la pièce mâle et un trou borgne de la pièce femelle qui est constituée en aluminium, de préférence dans un grade d'aluminium le plus pur possible.

Le fait de réaliser un trou borgne dans la pièce femelle au lieu d'un trou débouchant comme dans la demande FR 2989836, permet de renforcer mécaniquement la pièce femelle, ce qui évite toute déformation parasite lors du sertissage, et donc au final permet d'obtenir une traversée robuste.

Grâce à l'invention, on peut définir un accumulateur métal-ion avec n'importe quel matériau d'insertion supporté par un feuillard en aluminium qui est relié électriquement à la pièce femelle en alliage à base d'aluminium de la borne selon l'invention.

L'invention garantit en premier lieu une traversée étanche, robuste mécaniquement, c'est-à-dire, qui présente à la fois les caractéristiques suivantes :
- elle ne se déforme pas au cours des étapes d'assemblage de l'accumulateur,
- elle supporte un couple de serrage (généralement supérieur à 3N.m) pouvant permettre l'assemblage de l'accumulateur avec d'autres accumulateurs sous la forme de module par l'intermédiaire de barres d'assemblage, de type « busbar » ;
- elle peut rester intègre pendant toute la durée de vie d'un accumulateur dans son application, et donc résister aux vibrations, chocs mécaniques, variations de températures, typiquement entre - 40°C et+75°C, et de pression.., sans déformation parasite et sans fuite.

En outre, la base de la pièce femelle étant pleine, la pièce mâle n'est plus en contact direct avec les éléments internes à l'accumulateur qui participent à l'électrochimie de ce dernier, la parfaite étanchéité étant par ailleurs assurée entre la pièce femelle et la paroi de l'accumulateur qui supporte la traversée par le biais de la rondelle isolante inférieure.

Par « parfaite étanchéité », on entend une étanchéité selon un niveau parmi les plus stricts requis, typiquement inférieur à 10⁻⁸ mbar.1/s pour de l'hélium.

De préférence, l'ajustement serré de la portion de la pièce femelle dans le trou borgne de la pièce femelle est un ajustement de type N9p7, en particulier pour un diamètre d'alésage du trou borgne de l'ordre de 6mm. Il est précisé ici que l'ajustement considéré N9p7 est celui selon le système ISO d'ajustements.

Avantageusement, le(s) matériau(x) des pièces peuvent être adaptés et leurs sections dimensionnées de sorte à permettre le passage d'un courant électrique jusqu'à une valeur au moins égale à 100A.

Selon un mode de réalisation avantageux, la portion de la pièce mâle comprend au moins un conduit débouchant à la fois à l'extérieur de l'accumulateur et sur le fond du dans le trou borgne de la pièce femelle, de sorte à évacuer l'air lors du montage par sertissage de la pièce mâle dans la pièce femelle.

Ce mode est avantageux, car dans certaines conditions de sertissage, les inventeurs ont pu constater qu'il pouvait subsister un volume non compressible d'air correspondant à une chambre située entre l'extrémité de la pièce mâle et le fond du trou borgne de la pièce femelle.

Or, la présence de cette chambre peut avoir pour effet de s'opposer à l'obtention d'un serrage complet. Ainsi, le conduit débouchant dans la pièce mâle permet d'évacuer complément l'air lors du sertissage, la portion de la pièce mâle pouvant aller jusqu' à la butée mécanique contre le fond du trou borgne de la pièce femelle. Au final, la présence du conduit permet d' ajuster plus précisément la course d'insertion de la pièce mâle dans la pièce femelle et donc de minimiser le jeu entre elles, après sertissage. Ceci a pour effet de mieux maîtriser l'effort de sertissage à mettre en œuvre et de renforcer la qualité du serrage obtenue entre les deux pièces.

Le conduit débouchant peut être avantageusement réalisé dans la continuité d'un trou taraudé central de la pièce mâle. Le conduit peut être réalisé par perçage de 1 à 2 mm de diamètre lors de l'usinage de cette pièce mâle.

Selon un autre mode de réalisation, la pièce mâle est en alliage à base de cuivre, de préférence en cuivre électrolytique CuA1 ou en cuivre nickelé.

Le cuivre nickelé présente comme avantage d'être de même nature chimique que celle définie pour une borne négative en cuivre classique, ce qui peut permettre de conserver une interface identique vis-à-vis d'un utilisateur et ce même si l'électrochimie de l'accumulateur est différente d'une électrochimie classique.

L'invention concerne également, sous encore un autre aspect, une batterie ou accumulateur métal-ion, comportant un boitier avec un couvercle à travers lequel une traversée telle que décrite précédemment est réalisée.

Selon une caractéristique, la pièce mâle est de type filetée intérieurement et fait saillie vers l'extérieur du boitier.

Le couvercle peut être en aluminium, tel que l'aluminium 1050 ou 3003.

Selon une configuration avantageuse, la pièce femelle de la traversée est soudée à un collecteur de courant à base d'aluminium lui-même soudé à un feuillard d'électrode à base d'aluminium supportant un matériau actif d'insertion d'ions métal, de préférence choisi parmi un matériau à base de titanate, tel que l'oxyde de titanate de lithium Li₄TiO₅O₁₂, un matériau à base de silicium, un matériau à base de sodium.

L'invention concerne enfin un procédé de réalisation d'une traversée telle que décrite précédemment, selon lequel on réalise les étapes de la revendication 12. Ces étapes comprennent celles suivantes :
a/ insertion à travers l'orifice, depuis chacune des deux faces opposées de la paroi, d'une des portions de guidage des rondelles, de sorte qu'elles soient en appui contre le bord de l'orifice de la paroi,
b/ insertion, depuis une face de la paroi, de la pièce femelle en aluminium dans une des rondelles;
c/ emmanchement à force, depuis la face opposée de la paroi, de la pièce mâle, de sorte que la portion de la pièce mâle soit en butée contre le fond du trou borgne de la pièce femelle, chacune des portions d'appui des pièces mâle et femelle est en appui avec pression contre une portion d'appui des rondelles elle-même guidée contre le bord de l'orifice.

L'emmanchement à force permettant d'obtenir les appuis avec pression, selon l'étape c/ est avantageusement réalisé sous presse avec un effort supérieur ou égal à 1 tonne-force de sorte à obtenir un ajustement de type N9p7 entre portion de pièce mâle et trou borgne de pièce femelle, en particulier pour un diamètre d'alésage du trou borgne de la pièce femelle de l'ordre de 6mm.

### Description détaillée

D'autres avantages et caractéristiques de l'invention ressortiront mieux à la lecture de la description détaillée d'exemples de mise en œuvre de l'invention faite à titre illustratif et non limitatif en référence aux figures suivantes parmi lesquelles :
- la figure 1 est une vue en coupe axiale d'une traversée formant borne d'un accumulateur Li-ion selon un exemple de l'état de l'art;
- la figure 2 est une vue en coupe axiale d'une traversée formant borne d'un accumulateur Li-ion selon un autre exemple de l'état de l'art;
- la figure 3 est une vue en coupe axiale et en perspective d'une traversée formant borne d'un accumulateur Li-ion selon encore un autre exemple de l'état de l'art;
- la figure 4 est une vue en coupe axiale de la figure 3 ;
- la figure 5 est une vue en coupe axiale d'un couvercle d'accumulateur Li-ion selon l'état de l'art au travers duquel est réalisée la traversée selon les figures 3 et 4, en tant que borne négative, la borne positive étant quant à elle soudée directement sur le couvercle;
- la figure 6 est une vue en coupe axiale d'une traversée formant borne d'un accumulateur métal-ion selon un premier exemple de l'invention;
- la figure 7 est une vue en coupe axiale d'un couvercle d'accumulateur métal-ion selon l'invention au travers duquel est réalisée la traversée selon la figure 6, en tant que borne négative, la borne positive étant quant à elle soudée directement sur le couvercle;
- la figure 8 est une reproduction d'une photographie en coupe d'une traversée selon l'invention selon la figure 6 avec la pièce mâle réalisée en aluminium 5754 et la pièce femelle en aluminium 1050;
- la figure 9 est une reproduction d'une photographie en coupe d'une traversée selon l'invention selon la figure 6 avec la pièce mâle réalisée en cuivre Cu A1 et la pièce femelle en aluminium 1050;
- la figure 10 est une vue en coupe axiale d'une traversée formant borne d'un accumulateur métal-ion selon un deuxième exemple de l'invention ;
- la figure 11 est une vue en coupe axiale de la pièce mâle de la borne selon la figure 10;
- la figure 12 est une reproduction d'une photographie en coupe d'une traversée selon l'invention selon la figure 6 avec la pièce mâle réalisée en en cuivre Cu A1 et la pièce femelle en aluminium 1050;
- la figure 13 est une reproduction d'une photographie en coupe d'une traversée selon l'invention selon la figure 10 avec la pièce mâle réalisée en cuivre Cu A1 et la pièce femelle en aluminium 1050;
- les figures 14A et 14B sont des vues en perspective respectivement du dessus et du dessous d'un couvercle à section circulaire destiné à être fixé sur un boitier d'un accumulateur métal-ion, le couvercle intégrant une traversée étanche selon l'invention, en tant que borne de sortie d'une polarité;
- la figure 15 est une vue en perspective d'un boitier de forme cylindrique d'accumulateur métal-ion, avec un couvercle au travers duquel est réalisé une traversée formant borne selon l'invention;
- la figure 16 est une vue en perspective d'un boitier de forme prismatique d'accumulateur métal-ion, avec un couvercle au travers duquel est réalisé une traversée formant borne selon l'invention.

Les figures 1 à 5 sont relatives à trois exemples différents de traversée formant borne d'accumulateur Li-ion selon l'état de l'art. Ces figures 1 à 5 ont déjà été commentées en préambule et ne le sont donc pas plus ci-après.

Par souci de clarté, les mêmes références désignant les mêmes éléments de traversées selon l'état de l'art et selon l'invention sont utilisées pour toutes les figures 1 à 16.

Dans l'ensemble de la présente demande, les termes « inférieur », « supérieur », « bas », « haut », « dessous » et « dessus » sont à comprendre par référence par rapport à un boitier d'accumulateur métal-ion positionné à la verticale avec son couvercle sur le dessus et la traversée faisant saillie à l'extérieur du boitier vers le haut.

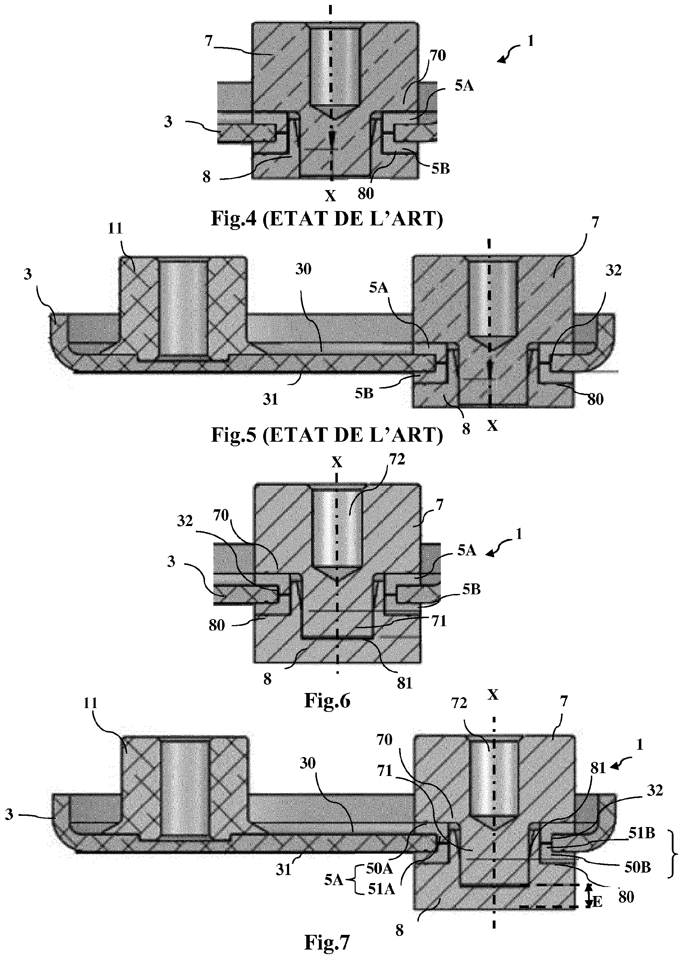

On a représenté en figure 6, un premier exemple de traversée formant borne 1 d'un accumulateur métal-ion, selon l'invention.

La traversée 1 selon l'invention reprend l'ensemble des composants de la traversée selon l'état de l'art, détaillée en préambule et montrée en figure 4, avec en outre les caractéristiques suivantes :
- la pièce femelle 8 est en aluminium de grade 1050 ;
- l'ajustement serré est réalisé entre la portion en saillie 71 de la pièce mâle 7 et le trou borgne 81 de la pièce femelle 8.

Ainsi, la base de la pièce femelle 8 est pleine, ce qui permet non seulement d'augmenter la résistance mécanique de la borne sous l'effet de la pression de sertissage, mais en outre d'enlever tout contact physique direct entre la pièce mâle 7 et les matériaux réalisant l'électrochimie de l'accumulateur, que sont les matériaux actifs d'insertion et l'électrolyte.

Les inventeurs ont procédé à différents essais de sertissage en augmentant l'épaisseur E de la base de la pièce femelle 8 de la borne selon l'invention.

Ils ont pu constater qu'avec un ajustement serré de type N9p7, c'est-à-dire pour une portion 71 de la pièce mâle de diamètre égal à 6mm +5µm/+30µm et un trou borgne 81 de la pièce femelle de diamètre d'alésage D de l'ordre de 6mm -25µm/0µm, une épaisseur E de valeur supérieure ou égale à 2mm permet à la traversée 1 de résister à un effort de sertissage conséquent, typiquement de l'ordre de 1,5 tonnes, sans déformation mécanique des pièces 7, 8.

Par définition, la valeur de l'épaisseur E de la base de la pièce femelle est d' autant plus importante que le diamètre d'alésage D est élevé car plus ce diamètre augmente et, plus l'effort de sertissage doit être important.

Une autre caractéristique importante pour garantir une liaison mécanique robuste entre pièce mâle 7 et femelle 8, après sertissage est la hauteur H de la portion du trou borgne 71 de la pièce femelle 8 dans laquelle la portion 71 de la pièce mâle 7 est ajustée serrée

Ainsi, les inventeurs ont également procédé à différents essais sous presse avec différents efforts appliqués pour l'emmanchement à force en augmentant la valeur de la hauteur H avec celle du diamètre d'alésage D du trou borgne 81.

Les conditions et résultats de ces essais sont indiqués dans le tableau ci-après.

| | | | |
|---|---|---|---|
| Diamètre D en mm | 4 à 5 | 6 | 7 à 8 |
| Hauteur H en mm | 1,4 à 1,7 | 1,8 à 2,2 | 2,2 à 2,6 |
| Epaisseur E en mm | ~ 1 | ~ 2 | ~ 3 |
| Effort de sertissage en tonne | ~ 1,0 | ~ 1,5 | 2 à 2,5 |

Pour réaliser une traversée selon le premier exemple selon l'invention, on réalise les étapes suivantes.

On insère à travers l'orifice 32, depuis chacune des deux faces 30, 31 du couvercle 3, une des portions de guidage 51A, 51B des rondelles 5A, 5B de sorte qu'elles soient en appui contre le bord de l'orifice 32.

On insère, depuis la face inférieure 31 du couvercle 3, la pièce femelle 8 dans la rondelle inférieure 5B.

On emmanche à force la pièce mâle 7, depuis la face supérieure 30 opposée à la face inférieure 31 du couvercle 3. L'emmanchement à force permet d'ajuster de manière serrée la portion saillante 71 de la pièce mâle 7 dans le trou borgne 81 de la pièce femelle 8 et d'avoir chacune des portions d'appui 70, 80 des pièces mâle 7 et femelle 8 en appui surfacique avec pression contre une portion d'appui 50A, 50B des rondelles 5A, 5B elle-même guidées par le bord de l'orifice 32.

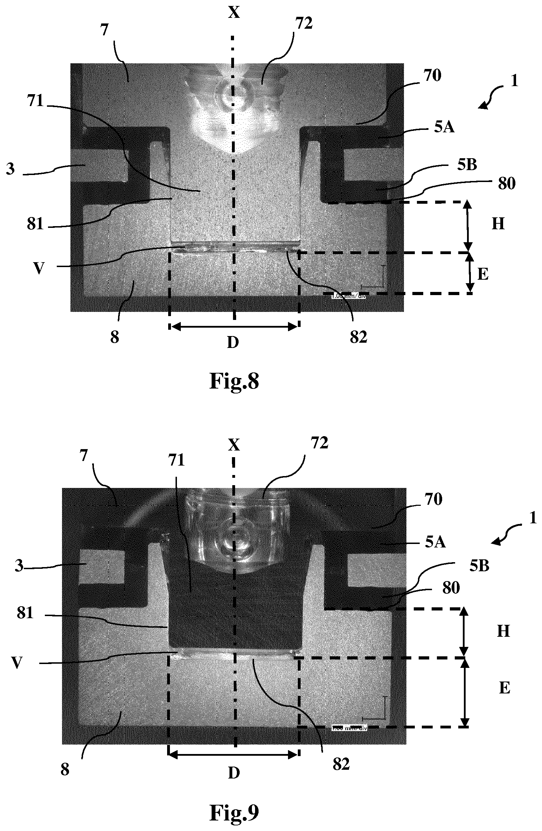

Des coupes de traversées selon le premier exemple de l'invention ont été réalisées. La figure 8 est une reproduction photographique d'une coupe avec une pièce mâle 7 en aluminium grade 5754 et une pièce femelle 8 en aluminium grade 1050, tandis que la figure 9 montre une traversée avec une pièce mâle 7 en cuivre Cu A1 et une pièce femelle 8 en aluminium grade 1050.

Comme visible sur ces coupes, il subsiste un volume d'air V non compressible correspondant à une chambre située entre l'extrémité de la portion 71 de la pièce mâle et le fond 82 du trou borgne 81 de la pièce femelle 8.

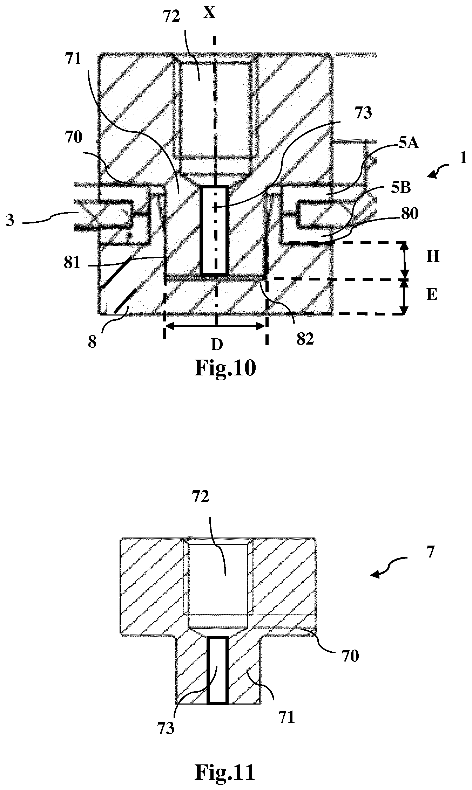

Afin de supprimer cette chambre qui peut avoir pour effet de s'opposer à l'obtention d'un serrage complet, les inventeurs ont réalisé une traversée 1 en perçant dans la continuité de la partie taraudée 72 de la pièce mâle 7, un conduit débouchant 73 supplémentaire. Ce conduit 73 représenté schématiquement en figures 10 et 11 permet ainsi d'évacuer l'air lors du sertissage de la pièce mâle 7 dans la pièce femelle 8.

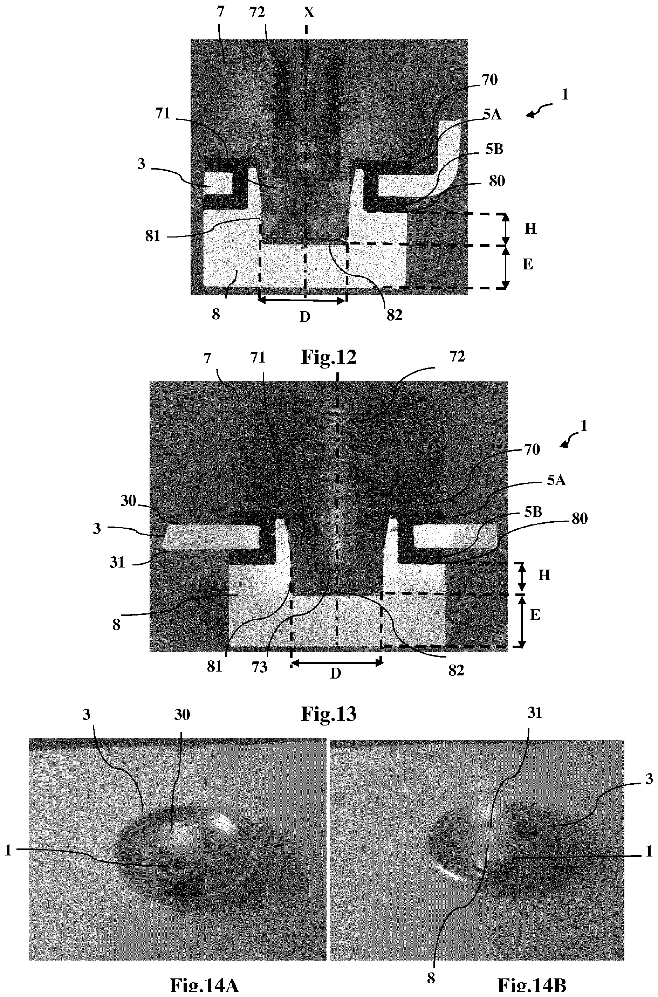

Afin de vérifier l'efficacité du conduit débouchant supplémentaire 73, une coupe a été réalisée : elle est montrée en figure 13 sur laquelle on voit clairement que le jeu entre extrémité inférieur de la portion 71 de la pièce mâle 7 et fond 82 du trou borgne 81est réduit au minimum, ce qui permet de mieux maîtriser l'effort de sertissage à mettre en œuvre et ainsi de renforcer la qualité du serrage obtenue entre les deux pièces 7, 8.

A titre de comparaison, on a réalisé les mêmes conditions de sertissage pour une traversée 1 avec des pièces 7, 8 identiques, selon le premier exemple de l'invention, c'est-à-dire sans le conduit 73 : la traversée 1 est montrée en figure 12. On distingue à nouveau la présence du volume V incompressible.

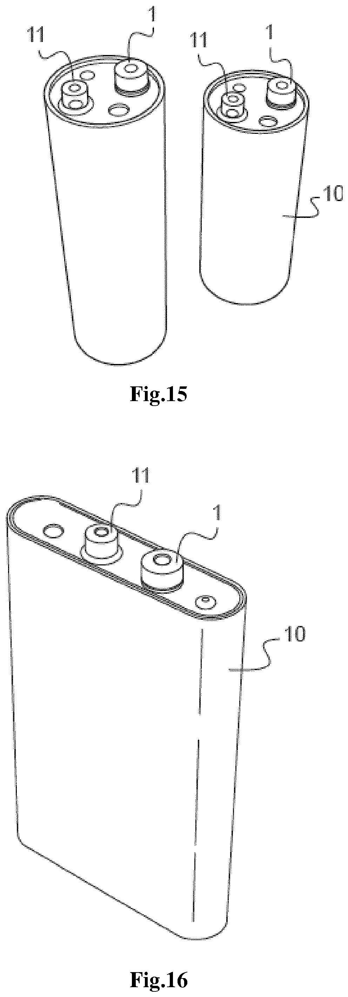

La traversée 1 selon l'invention peut être réalisée sur un couvercle 3 de boitier 10 d'accumulateur métal-ion aussi bien selon une géométrie cylindrique (figures 14A, 14B, 15) que selon une géométrie prismatique (figure 16). Dans ces différentes configurations, la borne 1 selon l'invention est par exemple négative, la borne positive 11 pouvant être réalisée, par exemple directement par soudure, également sur le couvercle 3.

Bien que non précisé auparavant, on s'assure que la base pleine de la pièce femelle 8, présente une surface suffisante pour pouvoir relier électriquement une connectique interne au boitier et elle-même reliée électriquement au faisceau électrochimique usuellement appelé bobineau, constitué d'une ou plusieurs cellules électrochimiques. On peut réaliser la liaison électrique entre connectique interne à base d'aluminium et base pleine de la pièce femelle en aluminium 8 par soudage.

L'invention n'est pas limitée aux exemples qui viennent d'être décrits ; on peut notamment combiner entre elles des caractéristiques des exemples illustrés au sein de variantes non illustrées.

L'expression « comportant un » doit être comprise comme étant synonyme de « comportant au moins un », sauf si le contraire est spécifié.

## Revendications

1. Traversée (1) formant borne pour accumulateur électrochimique métal-ion, réalisée à travers un orifice (32) débouchant de part et d'autre d'une paroi (3) comportant deux faces opposées (30, 31), comportant:
- une pièce mâle (7) électriquement conductrice et,
- une pièce femelle (8) en alliage à base d'aluminium, une portion (71) de la pièce mâle (7) étant ajustée serrée dans un trou borgne (81) de la pièce femelle (8),
la pièce mâle (7) étant en alliage à base d'aluminium différent de celui de la pièce femelle.

2. Traversée selon la revendication 1, comportant :
- deux rondelles (5A, 5B) électriquement isolantes, comportant chacune une portion d'appui (50A, 50B) en appui surfacique contre l'une (30, 31) des faces de la paroi et une portion de guidage (51A, 51B) en saillie par rapport à la portion d'appui et en contact avec le bord de l'orifice (32),
traversée dans laquelle chacune des pièces mâle et femelle conductrices comportant une portion d'appui (70, 80) en appui surfacique contre une portion d'appui (50A, 50B) des rondelles.

3. Traversée (1) selon la revendication 1, l'alliage aluminium de la pièce mâle étant choisi parmi un grade 5754, 6060 ou 3003 avec un état écroui H18, l'alliage d'aluminium de la pièce femelle étant un grade 1050.

4. Traversée selon l'une des revendications précédentes, l'ajustement serré de la portion (71) de la pièce mâle (7) dans le trou borgne (81) de la pièce femelle est un ajustement de type N9p7, en particulier pour un diamètre d'alésage du trou borgne (81) de l'ordre de 6mm.

5. Traversée (1) selon l'une des revendications précédentes, le(s) matériau(x) des pièces étant adaptés et leurs sections sont dimensionnées de sorte à permettre le passage d'un courant électrique jusqu'à une valeur au moins égale à 100A.

6. Traversée (1) selon l'une des revendications précédentes, la portion de la pièce mâle comprenant au moins un conduit (73) débouchant à la fois à l'extérieur de l'accumulateur et sur le fond du trou borgne de la pièce femelle, de sorte à évacuer l'air lors du montage par sertissage de la pièce mâle dans la pièce femelle.

7. Traversée (1) selon l'une des revendications précédentes, l'épaisseur de la pièce femelle mesurée entre le fond (82) du trou borgne (81) et la base de la pièce femelle (8) est supérieure ou égale à 2mm pour un diamètre d'alésage du trou borgne de l'ordre de 6mm.

8. Batterie ou accumulateur métal-ion comportant un boitier (10) avec un couvercle (3) à travers lequel une traversée (1) selon l'une quelconque des revendications 1 à 7 est réalisée.

9. Batterie ou accumulateur métal-ion selon la revendication 8, la pièce mâle (7) étant de type filetée intérieurement et fait saillie vers l'extérieur du boitier (10).

10. Batterie ou accumulateur métal-ion selon revendication 8 ou 9, le couvercle étant en aluminium, tel que l'aluminium 1050 ou 3003.

11. Batterie ou accumulateur métal-ion selon l'une des revendications 8 à 10, la pièce femelle de la traversée étant soudée à un collecteur de courant à base d'aluminium lui-même soudé à un feuillard d'électrode à base d'aluminium supportant un matériau actif d'insertion d'ions métal, de préférence choisi parmi un matériau à base de titanate, tel que l'oxyde de titanate de lithium Li₄TiO₅O₁₂, un matériau à base de silicium, un matériau à base de sodium.

12. Procédé de réalisation d'une traversée selon l'une quelconque des revendications 2 à 7, à l'exception de la revendication 3, selon lequel on réalise les étapes suivantes :
a/ insertion à travers l'orifice (32), depuis chacune des deux faces (30, 31) opposées de la paroi (3), d'une des portions de guidage (51A, 51B) des rondelles (5A, 5B), de sorte qu'elles soient en appui contre le bord de l'orifice (32) de la paroi,
b/ insertion, depuis une face (31) de la paroi, de la pièce femelle en aluminium (8) dans une des rondelles (5B);
c/ emmanchement à force, depuis la face opposée (30) de la paroi, de la pièce mâle (7), de sorte que la portion (71) de la pièce mâle (7) soit en butée contre le fond (82) du trou borgne (81) de la pièce femelle (8) et que chacune des portions d'appui (70, 80) des pièces mâle et femelle est en appui surfacique contre une portion d'appui (50A, 50B) des rondelles elle-même guidée contre le bord de l'orifice.

13. Procédé selon la revendication 12, l'emmanchement selon l'étape c/ étant réalisé sous presse avec un effort supérieur ou égal à 1 tonne-force de sorte à obtenir un ajustement de type N9p7 entre portion (71) de pièce mâle (7) et trou borgne (81) de pièce femelle (8), en particulier pour un diamètre d'alésage du trou borgne de la pièce femelle de l'ordre de 6mm.

## Patentansprüche

1. Durchführung (1), die eine Klemme für einen elektrochemischen Metall-Ionen-Akkumulator bildet und durch eine Öffnung (32) realisiert ist, die auf beiden Seiten einer Wand (3) mit zwei gegenüberliegenden Flächen (30, 31) mündet, und die Folgendes aufweist:
- ein elektrisch leitfähiges Einsteckteil (7) und
- ein Aufnahmeteil (8) aus einer Legierung auf Aluminiumbasis, wobei ein Abschnitt (71) des Einsteckteils (7) mit einem Presssitz in ein Sackloch (81) des Aufnahmeteils (8) eingepasst ist,
wobei das Einsteckteil (7) aus einer anderen Legierung auf Aluminiumbasis besteht als das Aufnahmeteil.

2. Durchführung nach Anspruch 1, die Folgendes aufweist:
- zwei elektrisch isolierende Scheiben (5A, 5B), die jeweils einen Anlageabschnitt (50A, 50B) aufweisen, der flächig an einer der Flächen (30, 31) der Wand anliegt, und einen Führungsabschnitt (51A, 51B), der mit Bezug auf den Anlageabschnitt vorsteht und mit dem Rand der Öffnung (32) in Kontakt ist,
Durchführung, bei der sowohl das leitenden Einsteckteil als auch das leitende Aufnahmeteil einen Anlageabschnitt (70, 80) aufweist, der flächig an einem Anlageabschnitt (50A, 50B) der Scheiben anliegt.

3. Durchführung (1) nach Anspruch 1, wobei die Aluminiumlegierung des Einsteckteils aus einer Güteklasse 5754, 6060 oder 3003 mit einem kaltverfestigten Zustand H18 ausgewählt ist und die Aluminiumlegierung des Aufnahmeteils eine Güteklasse 1050 hat.

4. Durchführung nach einem der vorhergehenden Ansprüche, wobei der Presssitz des Abschnitts (71) des Einsteckteils (7) in dem Sackloch (81) des Aufnahmeteils ein N9p7-Sitz ist, insbesondere für einen Bohrungsdurchmesser des Sacklochs (81) in der Größenordnung von 6 mm.

5. Durchführung (1) nach einem der vorhergehenden Ansprüche, wobei das Material bzw. die Materialien der Teile so angepasst sind und ihre Querschnitte so bemessen sind, dass ein elektrischer Strom bis zu einem Wert von mindestens 100 A hindurchfließen kann.

6. Durchführung (1) nach einem der vorhergehenden Ansprüche, wobei der Abschnitt des Einsteckteils mindestens einen Kanal (73) aufweist, der sowohl außerhalb des Akkumulators als auch am Boden des Sacklochs des Aufnahmeteils mündet, so dass die Luft beim Einpressen des Einsteckteils in das Aufnahmeteil abgeführt wird.

7. Durchführung (1) nach einem der vorhergehenden Ansprüche, wobei die Dicke des Aufnahmeteils, gemessen zwischen dem Boden (82) des Sacklochs (81) und der Basis des Aufnahmeteils (8) bei einem Bohrungsdurchmesser des Sacklochs in der Größenordnung von 6 mm größer oder gleich 2 mm ist.

8. Metall-Ionen-Batterie oder -Akkumulator mit einem Gehäuse (10) mit einem Deckel (3), durch den eine Durchführung (1) nach einem der Ansprüche 1 bis 7 ausgeführt ist.

9. Metall-Ionen-Batterie oder -Akkumulator nach Anspruch 8, wobei das Einsteckteil (7) vom Typ mit Innengewinde ist und vom Gehäuse (10) nach außen vorsteht.

10. Metall-Ionen-Batterie oder -Akkumulator nach Anspruch 8 oder 9, wobei der Deckel aus Aluminium, wie z. B. Aluminium 1050 oder 3003, besteht.

11. Metall-Ionen-Batterie oder -Akkumulator nach einem der Ansprüche 8 bis 10, wobei das Aufnahmeteil der Durchführung an einen Stromabnehmer auf Aluminiumbasis geschweißt ist, der seinerseits an ein Elektrodenband auf Aluminiumbasis geschweißt ist, das ein aktives Material zur Einfügung von Metallionen trägt, das vorzugsweise aus einem Material auf Titanatbasis, wie Lithiumtitanatoxid Li₄TiO₅O₁₂, einem Material auf Siliziumbasis und einem Material auf Natriumbasis ausgewählt ist.

12. Verfahren zur Herstellung einer Durchführung nach einem der Ansprüche 2 bis 7, mit Ausnahme von Anspruch 3, wobei die folgenden Schritte durchführt werden:
a/ Einsetzen eines der Führungsabschnitte (51A, 51B) der Scheiben (5A, 5B) durch die Öffnung (32) von jeder der beiden gegenüberliegenden Seiten (30, 31) der Wand (3) aus, so dass sie am Rand der Öffnung (32) der Wand anliegen,
b/ Einsetzen des Aufnahmeteils (8) aus Aluminium von einer Seite (31) der Wand aus in eine der Scheiben (5B);
c/ Einpressen des Einsteckteils (7) von der gegenüberliegenden Seite (30) der Wand aus, so dass der Abschnitt (71) des Einsteckteils (7) am Boden (82) des Sacklochs (81) des Aufnahmeteils (8) anliegt und jeder der Anlageabschnitte (70, 80) des Einsteckteils und des Aufnahmeteils flächig an einem Anlageabschnitt (50A, 50B) der Scheiben anliegt, der selbst gegen den Rand der Öffnung geführt wird.

13. Verfahren nach Anspruch 12, wobei das Einpressen gemäß Schritt c/ unter einer Presse mit einer Kraft größer oder gleich 1 Ton-Force realisiert wird, so dass eine Passung vom Typ N9p7 zwischen dem Abschnitt (71) des Einsteckteils (7) und dem Sackloch (81) des Aufnahmeteils (8) erzielt wird, insbesondere für einen Bohrungsdurchmesser des Sacklochs des Aufnahmeteils in der Größenordnung von 6 mm.

## Claims

1. Feedthrough (1) forming a terminal for a metal-ion electrochemical accumulator, provided through an aperture (32) opening out on either side of a wall (3) including two opposite faces (30, 31), including:
- an electrically conductive male part (7), and
- a female part (8) made of an aluminum-based alloy, a portion (71) of the male part (7) being tight-fitted into a blind hole (81) of the female part (8),
the male part (7) being made of an aluminum-based alloy that is different from that of the female part.

2. Feedthrough according to Claim 1, including:
- two electrically insulating washers (5A, 5B), each including a bearing portion (50A, 50B) superficially bearing against one (30, 31) of the faces of the wall and a guide portion (51A, 51B) protruding with respect to the bearing portion and making contact with the edge of the aperture (32),
in which feedthrough each of the conductive male and female parts includes a bearing portion (70, 80) superficially bearing against a bearing portion (50A, 50B) of the washers.

3. Feedthrough (1) according to Claim 1, the aluminum alloy of the male part being chosen from grade 5754, 6060 and 3003 alloys with an H18 temper, the aluminum alloy of the female part being a grade 1050 alloy.

4. Feedthrough according to one of the preceding claims, the tight fitting of the portion (71) of the male part (7) in the blind hole (81) of the female part is a type N9p7 fitting, in particular for a bore diameter of the blind hole (81) of the order of 6 mm.

5. Feedthrough (1) according to one of the preceding claims, the one or more materials of the parts and the dimensions of the cross sections of the parts being suitable for allowing an electric current up to a value that is at least equal to 100 A to pass.

6. Feedthrough (1) according to one of the preceding claims, the portion of the male part comprising at least one duct (73) opening out both on the outside of the accumulator and on the bottom of the blind hole of the female part, in such a way as to let air out when crimping the male part into the female part.

7. Feedthrough (1) according to one of the preceding claims, the thickness of the female part measured between the bottom (82) of the blind hole (81) and the base of the female part (8) being greater than or equal to 2 mm for a bore diameter of the blind hole of the order of 6 mm.

8. Metal-ion accumulator or battery including a housing (10) with a cover (3) through which a feedthrough (1) according to any one of Claims 1 to 7 is produced.

9. Metal-ion accumulator or battery according to Claim 8, the male part (7) being an internally threaded part and protruding toward the outside of the housing (10).

10. Metal-ion accumulator or battery according to Claim 8 or 9, the cover being made of aluminum, such as 1050 or 3003 aluminum.

11. Metal-ion accumulator or battery according to one of Claims 8 to 10, the female part of the feedthrough being welded to an aluminum-based current collector which is itself welded to an aluminum-based electrode foil bearing an active metal-ion insertion material, preferably chosen from a material based on titanate, such as lithium titanate oxide Li₄TiO₅O₁₂, a silicon-based material or a sodium-based material.

12. Method for producing a feedthrough according to any one of Claims 2 to 7, with the exception of Claim 3, wherein the following steps are carried out:
a/ inserting, through the aperture (32), from each of the two opposite faces (30, 31) of the wall (3), one of the guide portions (51A, 51B) of the washers (5A, 5B) such that they bear against the edge of the aperture (32) in the wall;
b/ inserting, from one face (31) of the wall, the aluminum female part (8) into one of the washers (5B);
c/ press-fitting, from the opposite face (30) of the wall, the male part (7) such that the portion (71) of the male part (7) abuts against the bottom (82) of the blind hole (81) of the female part (8) and such that each of the bearing portions (70, 80) of the male and female parts superficially bears against a bearing portion (50A, 50B) of the washers that is itself guided against the edge of the aperture.

13. Method according to Claim 12, the press-fitting operation in step c/ being carried out by pressing with a force that is greater than or equal to 1 tonne-force so as to obtain a type N9p7 fitting between portion (71) of male part (7) and blind hole (81) of female part (8), in particular for a bore diameter of the blind hole of the female part of the order of 6 mm.
